**Europäisches Patentamt**

(19) **European Patent Office**

**Office européen des brevets**

(11) **EP 0 606 354 B1**

(12) ## EUROPÄISCHE PATENTSCHRIFT

(45) Veröffentlichungstag und Bekanntmachung des Hinweises auf die Patenterteilung:
**01.05.1996 Patentblatt 1996/18**

(51) Int. Cl.$^6$: **B60L 11/02**, B60L 11/12

(86) Internationale Anmeldenummer: **PCT/DE92/00832**

(21) Anmeldenummer: **92921055.7**

(22) Anmeldetag: **30.09.1992**

(87) Internationale Veröffentlichungsnummer:
**WO 93/07018 (15.04.1993 Gazette 1993/10)**

(54) **NICHT-SPURGEBUNDENES FAHRZEUG MIT ELEKTRISCHEM ENERGIEWANDLER**

NON-TRACKBOUND VEHICLE WITH ELECTRIC ENERGY CONVERSION

VEHICULE NON LIE A DES RAILS POURVU D'UN CONVERTISSEUR D'ENERGIE ELECTRIQUE

(84) Benannte Vertragsstaaten:
**DE ES FR GB IT SE**

(30) Priorität: **04.10.1991 DE 4133013**

(43) Veröffentlichungstag der Anmeldung:
**20.07.1994 Patentblatt 1994/29**

(73) Patentinhaber: **FICHTEL & SACHS AG**
**D-97424 Schweinfurt (DE)**

(72) Erfinder:
- **ADLER, Uwe**
  **D-97422 Schweinfurt (DE)**
- **DREXL, Hans-Jürgen**
  **D-97453 Schonungen/Mbg. (DE)**
- **LUTZ, Dieter**
  **D-97422 Schweinfurt (DE)**
- **NAGLER, Franz**
  **D-97503 Ottendorf (DE)**
- **OCHS, Martin**
  **D-97422 Schweinfurt (DE)**
- **SCHIEBOLD, Stefan**
  **D-97421 Schweinfurt (DE)**
- **SCHMIDT-BRÜCKEN, Hans-Joachim**
  **D-97505 Geldersheim (DE)**

- **THIELER, Wolfgang**
  **D-97437 Hassfurt (DE)**
- **WAGNER, Michael**
  **D-97464 Niederwerrn (DE)**
- **WESTENDORF, Holger**
  **D-97456 Hambach (DE)**
- **WYCHNANEK, Rainer**
  **D-97532 Madenhausen (DE)**

(74) Vertreter: **Meissner, Peter E., Dipl.-Ing. et al**
**Meissner & Meissner,**
**Patentanwaltsbüro,**
**Hohenzollerndamm 89**
**D-14199 Berlin (DE)**

(56) Entgegenhaltungen:
**EP-A- 0 437 266         DE-A- 3 112 629**
**DE-A- 3 725 620         US-A- 4 853 553**

- **PATENT ABSTRACTS OF JAPAN vol. 7, no. 163 (M-229)(1308) 16. Juli 1983 & JP-A 58 069 403**
- **PATENT ABSTRACTS OF JAPAN vol. 14, no. 545 (M-1054) 4. Dezember 1990 & JP-A 22 30 959**
- **PATENT ABSTRACTS OF JAPAN vol. 15, no. 416 (M-1172) 23. Oktober 1991 & JP-A 31 75 125**

**Beschreibung**

Die Erfindung betrifft ein nicht-spurgebundenes Fahrzeug gemäß dem Oberbegriff der Patentansprüche 1 und 2.

Damit betrifft die Erfindung vornehmlich Personen- und Lastkraftwagen für den Straßenverkehr. Generell werden solche Fahrzeuge zur Lieferung der benötigten Antriebsenergie mit Verbrennungsmotoren ausgestattet. Der Anteil von mittels batteriegespeistem Elektromotor angetriebenen Fahrzeugen ist verschwindend gering.

Bei einem Verbrennungsmotor macht der für den Motor spezifische Drehmomentverlauf in Abhängig von der Drehzahl die Verwendung eines Schalt- oder Automatikgetriebes erforderlich, um abhängig von der Belastung und dem gewünschten Fahrverhalten das jeweils erforderliche Drehmoment bzw. die erforderliche Leistung an den Antriebsrädern zur Verfügung zu stellen.

Bei Fahrzeugen mit elektromotorischem Antrieb besteht grundsätzlich nicht das Erfordernis eines Getriebes im Antriebsstrang des Fahrzeugs, da Elektromotoren über einen breiten Drehzahlbereich ein relativ hohes Drehmoment erzeugen, so daß ein Umschalten entfällt.

Es wurde bereits ein nicht-spurgebundenes Fahrzeug vorgeschlagen, bei dem von einer Verbrennungsmotor-Generator-Einheit (VGE) Strom erzeugt wird, der dann über eine Energieverteiler-Leistungselektronik an die mit den Rädern des Fahrzeugs gekoppelten Elektromotoren gegeben wird. Dabei erfolgt die Einspeisung des Stroms in die Elektromotoren in Abhängigkeit eines als Sollsignal dienenden Fahrsignals unter Berücksichtigung des Betriebsverhaltens des Verbrennungsmotors.

Bei einem solchen Antrieb ergeben sich mehrere Vorteile, die bei einem Antrieb mit üblichem Verbrennungsmotor nicht oder zumindest nur mit erheblichem Aufwand erzielbar sind. Beispielsweise kann ohne großen Aufwand eine Schlupfsteuerung der Räder erfolgen. Bei einem Bremsvorgang können die mit den Rädern gekoppelten Elektromotoren als Generatoren arbeiten. Die gewonnene elektrische Energie kann z.B. zu Heizzwecken oder dergleichen verwendet werden.

Wird ein solches Fahrzeug mit an einen Verbrennungsmotor gekoppeltem Generator und über Elektromotoren angetriebenen Rädern beispielsweise im Stadtverkehr eingesetzt, so muß der Betrieb des Verbrennungsmotors den jeweiligen Leistungsanforderungen entsprechen, d.h. die Drehzahl des Verbrennungsmotors wird so variiert, daß dem jeweils erforderlichen Leistungsbedarf entsprochen wird. Bei häufigem Drehzahlwechsel des Verbrennungsmotors ergibt sich jedoch eine Beeinträchtigung des Wirkungsgrades des Verbrennungsmotors; denn mit dem häufigen Drehzahlwechsel geht naturgemäß ein häufiger Betrieb in einem Bereich des Kennlinienfeldes des Motors einher, in welchem Parameter wie minimaler Kraftstoffverbrauch bei gegebener Leistung, geringste Abgasemission, geringste Geräuschentwicklung und dergleichen einen nicht-optimalen Wert haben.

Aus der DE 37 25 620 A1 ist eine Antriebs- und Bremskonzeption für ein Kraftfahrzeug bekannt, das einen Verbrennungsmotor aufweist, der einen elektrischen Generator antreibt. Der Verbrennungsmotor ist als Schwingkolbenmotor ausgebildet. Der von dem Generator erzeugte Strom wird über einen als Leistungselektronik ausgebildeten Energieverteiler entsprechend einem von einem Fahrsignal abhängigen Steuersignal elektrischen Fahrmotoren, die mit jeweils einem Antriebsrad gekoppelt sind, zugeführt oder ggf. teilweise in einem Schwungradspeicher zwischengespeichert, der eine wahlweise als Motor oder Generator betreibbare elektrische Maschine beinhaltet. Beim Abbremsen des Fahrzeugs können die elektrischen Fahrmotoren von einer elektronischen Steuereinheit, die den Fahrbetrieb beeinflußt, in den Generatorbetrieb geschaltet werden, so daß zumindest ein Teil der Bremsenergie nach Umwandlung in elektrische Energie vom Schwungradspeicher aufgenommen werden kann. Bei Bedarf kann die Steuereinheit auch Energie aus dem Schwungradspeicher über die Leistungselektronik an die Fahrmotoren geben. Der Schwingkolbenmotor wird in diesem System mit konstanter Drehzahl betrieben, da der Generator, der fest mit dem Schwingkolbenmotor gekoppelt ist, stets einen Wechselstrom mit gleichbleibender Lastfrequenz erzeugen soll. Die Drehzahl der Antriebsräder wird über eine entsprechende Frequenzwandlung durch die Steuereinheit auf den gewünschten Wert eingestellt, so daß auf diesem Wege quasi ein stufenloses elektrisches Getriebe zwischen Schwingkolbenmotor und Antriebsrädern vorliegt. Bestandteil der Steuereinheit ist ein "Kennfeld-programmierter" Mikroprozessor, der im Falle einer Abbremsung des Fahrzeugs die Erzeugung der erforderlichen Bremskraft auf ein konventionelles Radbremssystem und auf die im Generatorbetrieb laufenden elektrischen Fahrmotoren verteilt. Die Kennfeld-Programmierung bezieht sich dabei auf Kennfelddaten außerhalb des Verbrennungsmotorbetriebs (z.B. Ladezustand des Schwungradspeichers sowie Stromfrequenz des über den Frequenzwandler gelieferten Wechselstroms sowie Fahrgeschwindigkeit und Fahrpedalstellung). Eine Steuerung des Verbrennungsmotors zur Anpassung an unterschiedliche Leistungsanforderungen anhand von Kennfelddaten des Verbrennungsmotors selbst (insbesondere Drehzahl/Drehmoment-Charakteristik in Abhängigkeit von Drosselklappenstellung, Zündwinkeleinstellung, Verbrauch, Schadstoffmenge und -zusammensetzung, Geräuschemission, Aggregateverschleiß) wird nicht erwogen. Insofern ist bei diesem Fahrzeug bei beliebigen Fahrsituationen kein Fahrbetrieb sichergestellt, der im Hinblick auf den Verbrennungsmotor optimiert ist.

Ein nicht-spurgebundenes Fahrzeug mit den im Oberbegriff der Patentansprüche 1 bzw. 2 angegebenen Merkmalen ist aus der EP-A-437 266 bekannt. Aufgabe der Erfindung ist es, ein nicht-spurgebundenes Fahrzeug der gattungsgemäßen Art derart weiterzubilden, daß bei Verwendung eines Energiespeichers als zusätzliche Energiequelle neben der durch den Verbrennungsmotor und den Generator gebildeten Einheit der Betrieb des Verbrennungsmotors optimiert wird.

Gelöst wird diese Aufgabe bei einem gattungsgemäßen nicht-spurgebundenen Fahrzeug durch die kennzeichnenden Merkmale der Patentansprüche 1 bzw. 2. Vorteilhafte Weiterbildungen der Erfindung sind durch die Unteransprüche 3 bis 9 gekennzeichnet.

Bei dem Energiespeicher handelt es sich um einen solchen Speicher, der relativ rasch Energie zur Verfügung stellen kann. Es kann sich grundsätzlich um einen mechanischen Speicher, beispielsweise ein Schwungrad, handeln, bevorzugt wird jedoch ein Akkumulator zum Speichern elektrischer Energie.

Wie eingangs erwähnt, erfolgt bei dem nicht-spurgebundenen Fahrzeug das Einspeisen von Strom in den Elektromotor oder in die Elektromotoren (vorzugsweise mindestens 2 oder 4 oder einer für jedes Fahrzeugrad), welche mit den Rädern gekoppelt sind, in Abhängigkeit von einem Fahrsignal. Dieses Fahrsignal wird z.B. von einem "Gashebel" (Fahrpedal) am Fahrzeug erzeugt, ähnlich wie bei einem herkömmlichen Kraftfahrzeug.

Die erfindungsgemäße Steuereinheit ist nun so ausgelegt, daß das Einspeisen von Strom in die Elektromotoren unter Berücksichtigung des durch das Fahrsignal repräsentierten Fahrerwunsches entweder direkt seitens der Verbrennungsmotor-Generator-Einheit, direkt seitens des Energiespeichers oder aber aus beiden Energiequellen erfolgt. Wichtig dabei ist, daß die Steuerung die voreingestellten Randbedingungen berücksichtigt.

Die Randbedingungen betreffen die Optimierung eines oder mehrerer der folgenden Parameter:

(a) Kraftstoffverbrauch;
(b) Abgasmenge- und Zusammensetzung;
(c) Geräuschemission; und
(d) Aggregatbeanspruchung.

Die folgenden Erläuterungen beziehen sich vornehmlich auf den Parameter "Kraftstoffverbrauch", wenngleich die Erfindung gleichermaßen die übrigen Parameter betrifft. Insbesondere kann man mehrere Parameter berücksichtigen, wobei dann entsprechende Kennlinienfelder des Verbrennungsmotors überlagert oder zusammengefaßt werden. Dabei kann man die einzelnen Parameter gleich stark oder unterschiedlich stark gewichten. Berücksichtigt man bei der Vorgabe der Randbedingungen insbesondere die Abgasmenge und Abgaszusammensetzung, so lassen sich mit dem erfindungsgemäßen Konzept auch in hohem Maße restriktive Umwelt-Auflagen bezüglich der Schadstoffemission erfüllen.

Ein wesentlicher Parameter beim Betrieb eines derartigen Fahrzeugs ist naturgemäß der Kraftstoffverbrauch. Für jeden Verbrennungsmotor gibt es ein Kennlinienfeld, welches z.B. den Verlauf des Drehmoments in Abhängigkeit von der Drehzahl darstellt. Es gibt einen Bereich, in dem der sogenannte spezifische Kraftstoffverbrauch am niedrigsten ist Bezogen auf eine bestimmte Leistung des Motors ergibt sich jeweils bei einer bestimmten Drehzahl und einem bestimmten Drehmoment des Motors ein optimal niedriger Kraftstoffverbrauch. Darüberhinaus gibt es einen Punkt, in dem der spezifische Verbrauch absolut am niedrigsten ist, also der Motor seinen günstigsten Wirkungsgrad besitzt. Bei gegenüber diesem Betriebspunkt niedrigerer Drehzahl ist zwar der Verbrauch noch niedriger, jedoch fällt die Leistung übermäßig stark ab. Bei einer Drehzahl oberhalb des genannten Punkts nimmt die Leistung zwar zu, aber im Vergleich zur Zunahme des Kraftstoffverbrauchs relativ gering. Deshalb sollte - wenn möglich - der Verbrennungsmotor stets in einem Bereich arbeiten, der in der Nähe des Punkts des absolut niedrigsten spezifischen Verbrauchs liegt. Dieses Ziel läßt sich in relativ weiten Grenzen durch die Erfindung realisieren. Abhängig vom Fahrerwunsch (der durch das Fahrsignal repräsentiert wird) sieht die erfindungsgemäße Steuerung vor, entweder die Verbrennungsmotor-Generator-Einheit allein, den Energiespeicher allein oder die beiden Energiequellen kombiniert für den Antrieb einzusetzen. Die gesamte benötigte Antriebsenergie wird stets in elektrischer Form bereitgestellt. Dabei erfolgt die Stromeinspeisung in die Elektromotoren über eine Energieverteiler-Leistungselektronik.

Erfindungsgemäß werden die Randbedingungen definiert durch Teilbereiche eines Kennlinienfeldes für den Betrieb des Verbrennungsmotors, wobei dem Energiespeicher ein Zustandssensor zugeordnet ist, der den Ladezustand des Energiespeichers erfaßt. Die Steuereinheit ermittelt anhand des Fahrsignals den Leistungsbedarf des Elektromotors bzw. der Elektromotoren. In Abhängigkeit von dem Leistungsbedarf und dem Ladezustand des Energiespeichers wird der Betrieb des Verbrennungsmotors dann auf einen günstigen Teilbereich des Kennlinienfeldes eingestellt.

Wie oben angedeutet, umfaßt ein erster Teilbereich einen bezüglich mindestens eines Parameters optimalen Betriebszustand, z.B. minimalen Kraftstoffverbrauch bei gegebener Motorleistung. Der Betrieb des Verbrennungsmotors wird dann innerhalb des Teilbereichs gehalten, solange die Leistungsanforderung seitens des Elektromotors in vorgegebenen Grenzen bleibt. Der Elektromotor wird von dem Generator gespeist. Gegebenenfalls wird überschüssige Energie in den Energiespeicher geladen. In diesem Betriebszustand ist der Wirkungsgrad des Antriebs am höchsten, der Motor arbeitet bei geringstem spezifischem Kraftstoffverbrauch.

Die obere und untere Leistungs- bzw. Drehmomentgrenze fü den ersten Teilbereich kann variiert werden, und zwar in Abhängigkeit des Ladezustands des Energiespeichers.

Erhöht sich der Leistungsbedarf so, daß er größer ist als die Leistung, die von der Verbrennungsmotor-Generator-Einheit abgegeben wird, solange diese im Bereich des günstigsten Kraftstoffverbrauchs arbeitet, so sind verschiedene Optionen möglich:
Der Verbrennungsmotor arbeitet weiter im Bereich des günstigsten Kraftstoffverbrauchs. Die zusätzliche Leistung wird aus dem Energiespeicher entnommen. Ist die Leistungsanforderung nur kurzfristig, so bleibt der Verbrennungsmotor in dem Betriebszustand, in dem er den günstigsten Kraftstoffverbrauch aufweist.

Bei längerem erhöhten Leistungsbedarf, insbesondere dann, wenn ein erhöhter Leistungsbedarf für einen längeren Zeitraum abzusehen ist, wird zunächst zusätzliche Energie aus dem Energiespeicher entnommen, und dann wird die Drehzahl des Verbrennungsmotors erhöht, bis dieser unter Umständen seine maximale Leistung abgibt. In dem Maße, in dem der Verbrennungsmotor die Leistung erhöht, verringert sich die aus dem Energiespeicher entnommene Leistung.

Wenn der Verbrennungsmotor im Bereich sehr hoher Leistung arbeitet und ein zusätzlicher Leistungsbedarf vorhanden ist, z.B. bei einem "Kick-down", wird der Verbrennungsmotor in den Bereich höchster Leistung gebracht, und zusätzlich wird dem Energiespeicher Energie entzogen, um das Fahrzeug noch stärker zu beschleunigen. Hierbei berücksichtigt die Steuerung, daß die aus dem Energiespeicher entnommene zusätzliche Leistung nur zeitlich beschränkt zur Verfügung steht. Durch geeignete Beschränkung der Leistungsentnehme aus dem Energiespeicher wird es ermöglicht, daß z.B. ein Überholvorgang sicher innerhalb einer bestimmten Zeitspanne mit sehr hoher Leistung, d.h. Beschleunigung, durchgeführt werden kann.

Selbstverständlich ist zeitweilig auch der bei Batteriefahrzeugen übliche Betriebszustand möglich, daß die gesamte in den Elektromotor eingespeiste Leistung aus dem Energiespeicher entnommen wird.

Wenn der Leistungsbedarf des Fahrzeugs geringer ist als die Leistung, die der Verbrennungsmotor im Bereich günstigsten Kraftstoffverbrauchs liefert, ist in bevorzugter Ausgestaltung vorgesehen, daß der Verbrennungsmotor intermittierend betrieben wird, d.h. abwechselnd eingeschaltet wird, um im Bereich des günstigsten Kraftstoffverbrauchs zu arbeiten, und zwischenzeitlich abgeschaltet wird. Diese Fahrweise ist insbesondere bei Stadtfahrten günstig, da nicht nur ein sehr günstiger Kraftstoffverbrauch erreicht wird, sondern gleichzeitig auch eine verringerte Schadstoffemission erzielbar ist. Die jeweils erforderliche Leistung zum Antreiben des Fahrzeugs wird aus dem Speicher entnommen und ein den Ladezustand des Energiespeichers überwachender Sensor signalisiert, wann der Verbrennungsmotor zum Aufladen des Energiespeichers gestartet werden muß.

Der oben angesprochene Fall, daß der Verbrennungsmotor hochgefahren wird und bis zum Erreichen der Maximalleistung der zusätzliche Leistungsbedarf aus dem Energiespeicher abgedeckt wird, wird in Verbindung mit beispielsweise einem Zeitglied realisiert. Wenn der erhöhte Leistungsbedarf länger als eine vorbestimmte Zeitspanne anhält, wird, nachdem zunächst die zusätzliche Leistung aus dem Energiespeicher entnommen worden ist, der Motor hochgefahren. Der Zeitpunkt des Hochfahrens des Verbrennungsmotors hängt auch ab vom Speicherzustand. Man kann außerdem in der Steuereinheit ein Lernprogramm vorsehen, welches beispielsweise die Häufigkeit speichert, mit der durchschnittlich über eine relativ lange Zeitspanne ein erhöhter Leistungsbedarf vorhanden ist. Ist diese Häufigkeit sehr groß, so kann der Verbrennungsmotor schon nach Ablauf jeweils einer sehr kurzen Zeitspanne hochgefahren werden, weil dann abzusehen ist, daß mit hoher Wahrscheinlichkeit ein länger anhaltender höherer Leistungsbedarf gegeben ist. Das Lernprogramm ermittelt also fortlaufend Häufigkeit und Dauer des erhöhten Leistungsbedarfs und entscheidet auf Grund der statistischen Auswertung dieser Daten über den Zeitpunkt der Anpassung der Verbrennungsmotorleistung.

Die erfindungsgemäße Anordnung gestattet auch das Nutzen von Bremsenergie über den Energieverteiler. Beim Bremsen arbeiten die Elektromotoren als Generatoren und speisen über die Energieverteiler-Leistungselektronik elektrische Energie in den Energiespeicher zurück. Gleichzeitig oder alternativ kann man die Bremsenergie auch mit einem Heizwiderstand zum Heizen verwenden.

Die Auswahl einer der oben angesprochenen Varianten hängt zum Teil sehr stark vom Ladezustand und auch von der Kapazität des Energiespeichers ab. Um gefährliche Situationen, insbesondere bei Überholvorgängen, zu vermeiden, ist es zweckmäßig, die Energieentnahme aus dem Speicher zu überwachen und anzuzeigen, so daß der Fahrer rechtzeitig darüber informiert wird, daß der Speicher zum größten Teil erschöpft ist.

Im folgenden werden Ausführungsbeispiele der Erfindung anhand der Zeichnung näher erläutert. Es zeigen:

Fig. 1    ein schematisches Blockschaltbild eines Kraftfahrzeugs mit elektrodynamischem Wandler und als Akkumulator ausgebildetem Energiespeicher;

Fig. 2    ein Kennlinienfeld eines 100-kW-Verbrennungsmotors; und

Fig. 3    eine schematische Darstellung möglicher Betriebszustände des Fahrzeugantriebs.

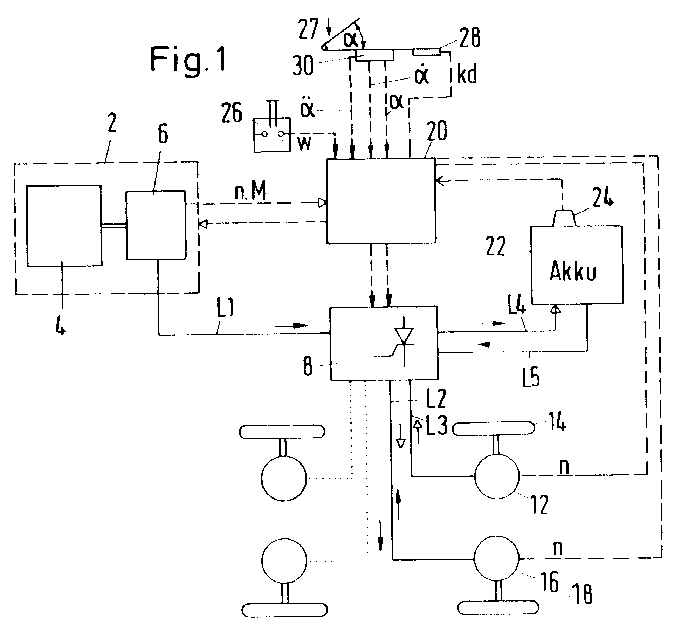

Figur 1 zeigt schematisch die hier wesentlichen Teile eines Personenkraftwagens. Eine im folgenden mit "VGE" abgekürzte Verbrennungsmotor-Generator-Einheit 2 enthält einen Verbrennungsmotor 4 und einen mit dessen Ausgangswelle starr gekoppelten Generator 6. Die von dem Generator 6 erzeugte elektrische Leistung wird über eine Leitung L1 auf eine als Energieverteiler 8 fungierende Leistungselektronik-Einheit gegeben, die über Leitungen L2 und L3 elektrischen Strom in zwei Elektromotoren 12 bzw. 16 einspeist, die mit jeweils einem Hinterrad 14 bzw. 18 des Fahrzeugs gekoppelt sind.

In Figur 1 ist links unten angedeutet, daß auch die beiden anderen Fahrzeugräder über Elektromotoren angetrieben werden können.

Das Einspeisen von Strom in die Elektromotoren 12 und 16 seitens des Energieverteilers 8 wird von einer Steuereinheit 20 gesteuert, die von der VGE 2 Signale bezüglich Drehzahl und Drehmoment empfängt, die von den Elektromotoren 12 und 16 Signale bezüglich der Drehzahlen dieser beiden Motoren empfängt und die außerdem Sensorsignale S von hier nicht mehr dargestellten Sensoren empfängt. Ein derartiges Sensorsignal ist z.B. ein Fahrhebel-Stellungssignal, welches kennzeichnend ist für die jeweilige Winkelstellung des Fahrpedals ("Gashebel"). Ein weiteres von der Steuereinheit 20 empfangenes Sensorsignal ist z.B. ein Geschwindigkeitssignal, welches von einer Tachowelle des Fahrzeugs geliefert wird. Weiterhin kommen als Sensorsignale ein Bremssignal, ein Beschleunigungssignal, ein Kaltlauf/Warmlauf-Signal, ein Zündwinkelsignal und dergleichen in Betracht.

Die Steuereinheit 20 enthält einen Mikroprozessor und eine Speichereinheit, die Steuerprogramme und Datenwerte von Kennlinienfeldern und dergleichen speichert.

Wenn der Fahrer des Fahrzeugs das Fahrpedal betätigt, wird das Stellungssignal als Sensorsignal S an die Steuereinheit 20 geliefert. Die Steuereinheit 20 kann daraus unter Berücksichtigung der Zeit durch Differenzenquotientenbildung ein Geschwindigkeitssignal für die Fahrhebelbetätigung ermitteln. Außerdem kann ein Beschleunigungssignal für den Fahrhebel ermittelt werden. Anhand dieser Daten läßt sich auf den jeweiligen Fahrerwunsch rückschließen. Bei hoher Fahrhebel-Geschwindigkeit ist z.B. eine hohe Fahrzeugbeschleunigung erwünscht, und zwar, falls der Fahrhebel vollständig oder fast vollständig durchgedrückt ist, bis zu einer relativ hohen Endgeschwindigkeit.

Die Steuereinheit 20 setzt diese Signale mittels Steuerprogrammen um in Steuersignale, die auf den Energieverteiler 8 gegeben werden. In Figur 1 sind Energieübertragungsleitungen ausgezogen, Signalübertragungsleitungen gestrichelt dargestellt. Abhängig von den Steuersignalen liefert dann der Energieverteiler an die beiden Elektromotoren 12 und 16 einen Strom, so daß der Antrieb in der vom Fahrer gewünschten Weise erfolgt.

Als besonderes Merkmal besitzt das Fahrzeug einen Energiespeicher, der hier als Akkumulator 22 zum Speichern elektrischer Energie ausgelegt ist. Der Akkumulator ist über zwei elektrische Leitungen L4 und L5 mit dem Energieverteiler 8 verbunden, so daß über die Leitung L4 Energie in den Akkumulator eingespeichert und über die Leitung L5 Energie aus dem Akkumulator entnommen wird.

Der Energieverteiler 8 ist in für den Fachmann prinzipiell bekannter Weise derart ausgestaltet, daß die Energie, die den Elektromotoren 12 und 16 zugeführt wird, wahlweise über die Leitung L1, also von der VGE, und/oder über die Leitung L5, also von dem Energiespeicher 22, geliefert wird.

Ein Sensor 24 signalisiert der Steuereinheit 20 den jeweiligen Ladezustand des Energiespeichers 22.

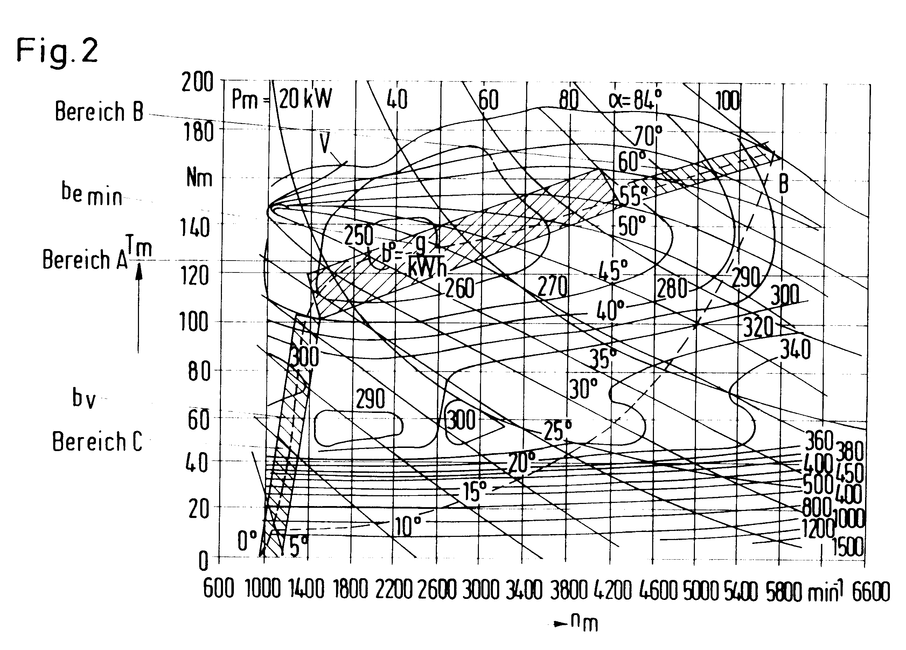

Figur 2 zeigt ein typisches Kennlinienfeld eines 100-kW-Ottomotors. Auf der Ordinate sind Drehmomentwerte, auf der Abzisse Drehzahlen aufgetragen. Eine gestrichelte Linie $b_v$ kennzeichnet den jeweils für bestimmte Drehzahlen günstigsten Verbrauch bei unterschiedlichen Leistungsanforderungen. Diese Linie $b_v$ ist in drei, in Fig. 2 schraffiert dargestellte Bereiche unterteilt, nämlich in einen mittleren Bereich A, einen oberen Bereich B und einen unteren Bereich C.

Der mittlere Bereich A liegt in einem durch eine "Höhenlinie" umschlossenen Bereich, in welchem ein bestimmter spezifischer Verbrauch des Motors gegeben ist. Dieser Bereich (Muschel) ist derjenige Bereich, in welchem der Motor möglichst arbeiten sollte, um insgesamt einen hohen Wirkungsgrad, also einen geringen spezifischen Verbrauch des Motors zu erzielen.

Der obere Bereich B ist gekennzeichnet durch höhere Drehzahlen und höheres Drehmoment (und mithin höhere Leistung, da sich die Leistung aus dem Produkt von Drehzahl und Drehmoment ergibt). Der untere Bereich C ist gekennzeichnet durch eine sehr niedrige Drehzahl bei niedrigem Drehmoment bzw. niedriger Leistung.

Innerhalb der Speichereinheit sind z.B. in Tabellenform die Kennwerte des Verbrennungsmotors gespeichert. Die in Fig. 2 dargestellten Bereiche A, B, C bilden Randbedingungen für den Berieb der gesamten Antriebseinheit des Fahrzeugs. Im vorliegenden Ausführungsbeispiel wird ein möglichst geringer Kraftstoffverbrauch, also insgesamt ein möglichst geringer Energiebedarf angestrebt, wobei jedoch dem jeweiligen Fahrerwunsch weitestgehend Rechnung getragen werden soll. Das heißt: Falls der Fahrer eine sehr hohe Beschleunigung des Fahrzeugs wünscht, wird diesem Wunsch nachgekommen, wobei jedoch die Einspeisung des Stroms in die Elektromotoren 12 und 16 unter Berücksichtigung der genannten Randbedingungen wahlweise seitens der VGE 2 und/oder des Energiespeichers 22 erfolgt.

Bezug nehmend auf Figur 2 bedeutet ein möglichst geringer Energieaufwand, daß der Motor möglichst im Bereich A, und zwar am Punkt $b_{emin}$ betrieben wird, d.h. am Punkt des absolut niedrigsten spezifischen Verbrauchs. In Fig. 2 erstreckt sich der Bereich A in Richtung der Ordinate über einen gewissen Drehmomentbereich. Dies deutet an, daß die Linie $b_v$ des günstigsten Verbrauchs für unterschiedliche Leistungsanforderungen auch in gewissen Grenzen verlassen werden kann. Voraussetzung dafür ist es, daß der Wirkungsgrad der VGE immer noch größer ist als der Speicherwirkungsgrad. Würde man, um den Motor möglichst nahe beim Punkt $b_{emin}$ zu betreiben, bei jeder erhöhten Leistungsanforderung die zusätzliche Leistung aus dem Speicher entnehmen, so wäre der durch das Umspeichern unvermeidliche Energieverlust möglicherweise höher als die Differenz zwischen dem optimalen Wirkungsgrad und dem durch Verlassen der Linie $b_v$ definierten verschlechterten Wirkungsgrad.

Grundsätzlich wird im Bereich A der Leistungsbedarf der Elektromotoren 12 und 16 direkt von der VGE gedeckt, solange deren Wirkungsgrad höher ist als der Speicherwirkungsgrad. Der Speicherwirkungsgrad ist das Verhältnis der vom Speicher an die Elektromotoren abgegebenen Energie $E_{aus}$, bezogen auf die zur Speicherung aufzubringende Energie $E_{ein}$:

$$\eta \, Akku = \frac{E_{aus}}{E_{ein}} \qquad (1)$$

Die zur Speicherung einer Energiemenge auf zubringende Energie $E_{ein}$ umfaßt die geladene Energie, die für den Speichervorgang aufzubringende Energie und die zum Entladen des Speichers aufzubringende Energie.

Der Wirkungsgrad der VGE stellt sich dar als das Produkt aus dem Wirkungsgrad des Verbrennungsmotors und dem Wirkungsgrad des Generators:

$$\eta \, VGE = Verb.\text{-}Mot \times \eta \, Gen \qquad (2)$$

Die direkte Deckung des Leistungsbedarfs seitens der VGE erfolgt also unter der Bedingung:

$$\eta \, VGE \geq \eta \, Akku \qquad (3)$$

Wie weit die Grenzen des Bereichs A gezogen werden, hängt ab vom Ladungszustand des Energiespeichers 22. Bei vollem Speicher können die Grenzen relativ weit gesteckt werden. In der Steuereinheit werden beispielsweise Grenzwerte für den Bereich A gespeichert, und diese Grenzwerte können mit einem Faktor multipliziert werden, der von dem Ladungszustand des Energiespeichers 22 abhängt. Dieser Ladungszustand wird über den Sensor 24 der Steuereinheit 20 mitgeteilt.

Wenn der Antrieb im Bereich A arbeitet und die Elektromotoren 12, 16 etwas weniger Energie anfordern, als der Verbrennungsmotor im günstigsten Betriebszustand abgibt, wird die überschüssige Ladung über den Energieverteiler 8 in den Energiespeicher 22 eingespeichert.

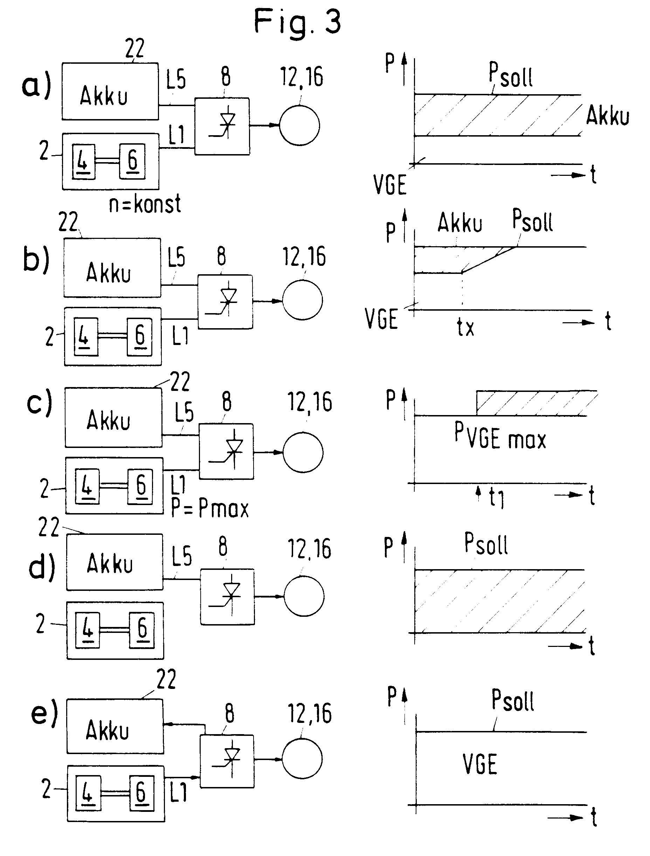

Wenn nun der Leistungsbedarf der Elektromotoren 12, 16 steigt, z.B. dadurch, daß sich das Fahrzeug an einer Steigung befindet oder der Fahrer das Fahrzeug beschleunigen möchte, so ergibt sich die in Figur 3a dargestellte Möglichkeit, daß die VGE bei im wesentlichen konstanter Drehzahl in der Nähe des verbrauchsgünstigsten Punkts $b_{emin}$ arbeitet, wahrend der zusätzliche Leistungsbedarf aus dem Energiespeicher 22 gedeckt wird. In Figur 3a ist dies dadurch angedeutet, daß sowohl die VGE 2 als auch der Energiespeicher (Akku) 22 über die Leitungen L1 bzw. L5 an den Energieverteiler 8 aktiv angeschlossen sind. Rechts in Figur 3a ist der von der Zeit abhängige Leistungsbedarf dargestellt. Der obere Bereich ist schraffiert dargestellt und kennzeichnet die von dem Energiespeicher 22 gelieferte Energie pro Zeiteinheit. Diese Energie ergänzt die von der VGE 2 gelieferte Energie, so daß der Sollwert $P_{soll}$ erreicht wird.

Der in Figur 3a dargestellte Zustand ist sinnvoll, wenn kurzzeitige erhöhte Leistungsanforderungen seitens der Elektromotoren 12, 16 bestehen.

Figur 3b zeigt ein Betriebsverhalten, welches zunächst dem Zustand nach Figur 3a entspricht, d.h. zunächst wird die von der im optimalen Betriebszustand laufenden VGE 2 gelieferte Energie bis auf den Wert $P_{soll}$ durch Energie aus dem Energiespeicher 22 ergänzt. Von einem Zeitpunkt tx an wird jedoch die Drehzahl des Verbrennungsmotors erhöht. In dem Maße, in dem mehr Energie direkt von der VGE 2 an die Elektromotoren 12, 16 geliefert wird, verringert sich der aus dem Energiespeicher 22 zusätzlich aufgebrachte Anteil.

Der Zeitpunkt tx kann beispielsweise durch ein Zeitglied festgelegt werden. Wenn eine erhöhte Leistungsanforderung entsteht, wird ein Zeitglied innerhalb der Steuereinheit 20 gestartet. Besteht die Leistungsanforderung noch, wenn die durch das Zeitglied festgelegte Zeitspanne abgelaufen ist, so wird dann die VGE 2 hochgefahren. Diese Maßnahme ist deshalb zweckmäßig, weil die aus dem Energiespeicher 22 entnommene Energie sich erschöpft und verhindert werden muß, daß sich der Energiespeicher 22 übermäßig stark entlädt.

Die Zeitspanne bis zum Hochfahren der VGE 2 kann abhängig vom Ladungszustand des Energiespeichers 22 variiert werden. Das Hochfahren der VGE 2 kann auch davon abhängig gemacht werden, mit welcher Häufigkeit relativ lange anhaltende zusätzliche Leistungsanforderungen auftreten. Hierzu kann die Steuereinheit 20 die Situationen zählen, die dem in Fig. 3b dargestellten Betriebsverhalten entsprechen. Treten innerhalb einer Zeitspanne von beispielsweise 10 Minuten oder 30 Minuten mehrmals relativ längere erhöhte Leistungsanforderungen auf, so kann der Zeitpunkt tx in Fig. 3b mehr nach links verschoben werden, da die Steuerung "weiß", daß mit hoher Wahrscheinlichkeit eine längere erhöhte Leistungsanforderung anstehen wird.

Figur 3c zeigt den Zustand, daß die VGE 2 maximale Leistung abgibt, das Fahrpedal also fast vollständig durchgedrückt ist. Wenn nun z.B. ein "Kick-down" im Zeitpunkt t1 erfolgt, wird zusätzlich der Energiespeicher angezapft, so daß vom Zeitpunkt t1 an über die Leitung L5 ebenfalls Energie geliefert wird. Wenn die VGE 2 praktisch Höchstleistung abgibt, läßt sich durch diese Maßnahme also noch ein zusätzlicher Schub erreichen. Ein solcher zusätzlicher Schub kann dann sinnvoll sein, wenn z.B. ein Überholvorgang stattfindet, insbesondere ein Überholvorgang an einer Steigung.

Allerdings muß beachtet werden, daß der in Figur 3c dargestellte Zustand ab dem Zeitpuntk t1 nur beschränkt möglich ist, da sich der Energiespeicher 22 fortwährend entlädt. Mittels einer Warnanzeige kann dem Fahrer signalisiert werden, wie lange der Zustand besonders großer Beschleunigung noch aufrechterhalten werden kann. Der Fahrer kann sich dann entsprechend verhalten.

Die in den Fig. 3a, 3b und 3c dargestellten Situationen entsprechen einem Betrieb des Bereichs B, also einem Zustand erhöhter Leistungsanforderung. Gemäß Fig. 3a lohnt es sich nicht, den Betrieb der VGE 2 hochzufahren, so daß ein kurzer zusätzlicher Leistungsbedarf aus dem Energiespeicher 22 gedeckt wird.

Gemäß Fig. 3b würde sich bei länger anhaltendem Speicherbetrieb der Speicher zu schnell entladen.

Gemäß Fig. 3c erfolgt eine zusätzliche "Leistungsspritze", um z.B. eine erhöhe Beschleunigung zu erzielen.

Gemäß Fig. 3d ist mit dem Energieverteiler 8 lediglich der Energiespeicher 22 über die Leitung L5 verbunden. Dieser Zustand kann sowohl dem Bereich B als auch dem Bereich C entsprechen. Bei sehr hoher Leistungsanforderung kann die gesamte Leistung aus dem Akkumulator entnommen werden. Dieser Zustand ist jedoch in der Praxis kaum interessant. Interessant hingegen ist der Betrieb im Bereich C, d.h. in einem Bereich, in dem der im optimalen Betriebszustand laufende Verbrennungsmotor wesentlich mehr Energie an den Generator liefern würde, als die Elektromotoren 12, 16 benötigen. In diesem Fall wird die VGE 2 vollständig abgeschaltet, und es erfolgt ein Antrieb ausschließlich durch Speisung aus dem Energiespeicher 22. Diese Fahrweise ist insbesondere im dichten Stadtverkehr, bei Staus und dergleichen günstig. Wenn sich der Energiespeicher 22 bis zu einem gewissen Grad entladen hat, kann der Motor wieder eingeschaltet werden.

Die in Fig. 3e dargestellte Situation entspricht dem Bereich A des Kennlinienfeldes. Die gesamte Leistung wird direkt von der VGE 2 zur Verfügung gestellt. Mögliche überschüssige Energie wird von der VGE 2 über den Energieverteiler 8 in den Energiespeicher 22 eingespeist.

Das oben beschriebene Ausführungsbeispiel bezieht sich speziell auf den Parameter "Kraftstoffverbrauch". Die Steuerung der Stromeinspeisung in die Elektromotoren 12 und 16 aus der VGE 2 und/oder dem Energiespeicher 22 erfolgt nach Maßgabe eines möglichst geringen Energieverbrauchs. Alternativ dazu oder zusätzlich können auch andere Betriebsparameter maßgeblich für die Steuerung sein. Insbesondere sind hier die Abgasmenge und die Abgaszusammensetzung zu erwähnen, da durch eine solche Steuerung mit relativ einfachen Mitteln die Schadstoffemission durchschnittlich auf einem sehr geringen Wert gehalten werden kann.

Darüber hinaus kann als Betriebsparameter auch die Geräuschemission und/oder die Aggregatbeanspruchung zugrundegelegt werden. Die Aggregatbeanspruchung ist dann besonders hoch, wenn eine "sportliche" Fahrweise bevorzugt ist. Aufgrund häufiger hoher Drehzahlen und häufiger Lastwechsel werden die mechanisch bewegten Teile besonders beansprucht. Man kann die Steuerung so auslegen, daß zu häufige und starke Lastwechsel vermieden werden. Die verschiedenen Betriebsparameter können auch gemeinsam, jeweils mit einer bestimmten Gewichtung behaftet, in die Steuerung eingehen.

Die Realisierung der verschiedenen Steuerungsmöglichkeiten erfordert keinen nennenswerten Aufwand. Insbesondere ist weder ein zusätzlicher Bauraum für voluminöse zusätzliche Teile des Antriebs erforderlich, noch muß eine Gewichtszunahme in Kauf genommen werden. Im Stadtverkehr sowie im sogenannten "Stop-and-go"-Verkehr ist eine umweltschonende Fahrweise möglich, wobei auf langen Strecken dennoch ein Fahrverhalten erzielt werden kann, welches demjenigen herkömmlicher Fahrzeuge mit Verbrennungsmotor nicht nachsteht.

## Patentansprüche

1. Nicht-spurgebundenes Fahrzeug, bei dem mindestens ein Rad (14, 18) für den Antrieb mit einem Elektromotor (12, 16) gekoppelt ist, welcher über einen elektronischen Energieverteiler (8) nach Maßgabe von seitens einer Steuereinheit (20) erzeugten und von einem Fahrsignal abhängigen Steuersignal mit Strom gespeist wird, der von einem an einen Verbrennungsmotor (4) gekoppelten Generator (6) geliefert wird,

   - wobei ein Energiespeicher (22) vorgesehen ist, in den und aus dem über den Energieverteiler (8) Energie einspeicherbar bzw. abrufbar ist,

   - wobei dem Energiespeicher (22) ein Zustandssensor (24) zugeordnet ist, der den Ladezustand des Energiespeichers (22) erfaßt, und die Steuereinheit (20) anhand des Fahrsignals den Leistungsbedarf des Elektromotors (12, 16) ermittelt,

   - wobei die gesamte Antriebsenergie in elektrischer Form zur Verfügung gestellt wird,

   - wobei die Steuereinheit (20) für das Einspeisen von Strom in den Elektromotor (12, 16) über den Energieverteiler (8) die Entnahme von Energie aus dem Generator (6) und/oder dem Energiespeicher (22) nach Maßgabe vorbestimmter, den Verbrennungsmotor betreffender Randbedingungen steuert,

   - die die Optimierung mindestens eines der folgenden Parameter

      (a) Kraftstoffververbrauch;
      (b) Abgasmenge und Abgaszusammensetzung;
      (c) Geräuschemission; und
      (d) Aggregatbeanspruchung,

   betreffen

- und definiert sind durch Teilbereiche (A, B, C) eines Kennlinienfeldes für den Betrieb des Verbrennungsmotors (4),

- und wobei die Steuereinheit (20) abhängig von dem Leistungsbedarf des Elektromotors (12, 16) und dem Ladezustand des Energiespeichers (22) den Betrieb der aus Verbrennungsmotor (4) und Generator (6) bestehenden Einheit (2) auf einen der Teilbereiche einstellt,

dadurch gekennzeichnet,
daß ein erhöhter Leistungsbedarf des Elektromotors (12, 16) erst dann zu einer Einstellung einer höheren Leistung des Verbrennungsmotors (4) unter Erhöhung der Motordrehzahl führt, wenn der angeforderte erhöhte Leistungsbedarf über eine von der Steuereinheit (20) vorgegebene Zeitspanne anhält, wobei
die Größe der Zeitspanne in Abhängigkeit vom Ladezustand des Energiespeichers (22) festgelegt ist.

2. Nicht-spurgebundenes Fahrzeug, bei dem mindestens ein Rad (14, 18) für den Antrieb mit einem Elektromotor (12, 16) gekoppelt ist, welcher über einen elektronischen Energieverteiler (8) nach Maßgabe von seitens einer Steuereinheit (20) erzeugten und von einem Fahrsignal abhängigen Steuersignal mit Strom gespeist wird, der von einem an einen Verbrennungsmotor (4) gekoppelten Generator (6) geliefert wird,

- wobei ein Energiespeicher (22) vorgesehen ist, in den und aus dem über den Energieverteiler (8) Energie einspeicherbar bzw. abrufbar ist,

- wobei dem Energiespeicher (22) ein Zustandssensor (24) zugeordnet ist, der den Ladezustand des Energiespeichers (22) erfaßt, und die Steuereinheit (20) anhand des Fahrsignals den Leistungsbedarf des Elektromotors (12, 16) ermittelt,

- wobei die gesamte Antriebsenergie in elektrischer Form zur Verfügung gestellt wird,

- wobei die Steuereinheit (20) für das Einspeisen von Strom in den Elektromotor (12, 16) über den Energieverteiler (8) die Entnahme von Energie aus dem Generator (6) und/oder dem Energiespeicher (22) nach Maßgabe vorbestimmter, den Verbrennungsmotor betreffender Randbedingungen steuert,

- die die Optimierung mindestens eines der folgenden Parameter

    (a) Kraftstoffververbrauch;

    (b) Abgasmenge und Abgaszusammensetzung;
    (c) Geräuschemission; und
    (d) Aggregatbeanspruchung,

    betreffen

- und definiert sind durch Teilbereiche (A, B, C) eines Kennlinienfeldes für den Betrieb des Verbrennungsmotors (4),

- und wobei die Steuereinheit (20) abhängig von dem Leistungsbedarf des Elektromotors (12, 16) und dem Ladezustand des Energiespeichers (22) den Betrieb der aus Verbrennungsmotor (4) und Generator (6) bestehenden Einheit (2) auf einen der Teilbereiche einstellt,

dadurch gekennzeichnet,
daß ein erhöhter Leistungsbedarf des Elektromotors (12, 16) erst dann zu einer Einstellung einer höheren Leistung des Verbrennungsmotors (4) unter Erhöhung der Motordrehzahl führt, wenn der angeforderte erhöhte Leistungsbedarf über eine von der Steuereinheit (20) vorgegebene Zeitspanne anhält, wobei
die Steuereinheit (20) ein Lernprogramm beinhaltet, das statistisch die Häufigkeit und Dauer des die jeweils eingestellte Leistung des Verbrennungsmotors (4) übersteigenden aktuellen Leistungsbedarfs, der über das Fahrsignal bestimmt ist, ermittelt und danach den Zeitpunkt bestimmt, zu dem eine Einstellung der Leistung des Verbrennungsmotors (4) auf die angeforderte Leistung erfolgt.

3. Fahrzeug nach einem der Ansprüche 1 bis 2, dadurch gekennzeichnet,
daß der Energiespeicher als Akkumulator (22) ausgebildet ist.

4. Fahrzeug nach einem der Ansprüche 1 bis 3, dadurch gekennzeichnet,
daß verschiedene Randbedingungen gleichzeitig und mit definierten Gewichtungen berücksichtigt werden.

5. Fahrzeug nach einem der Ansprüche 1 bis 4, dadurch gekennzeichnet,
daß ein erster Teilbereich (A) einen bezüglich mindestens eines Parameters optimalen Betriebszustand ($be_{min}$) umfaßt, insbesondere einen minimalen Kraftstoffverbrauch bei gegebener Motorleistung, und daß der Betrieb der aus Verbrennungsmotor (4) und Generator (6) bestehenden Einheit (2) innerhalb dieses Teilbereichs (A) gehalten wird, solange die Leistungsanforderung seitens des Elektromotors (12, 16) in vorgegebenen Grenzen bleibt, während der Elektromotor (12, 16) von dem Generator (6) gespeist wird und gegebenenfalls überschüssige Energie in den Energiespeicher (22) geleitet wird.

6. Fahrzeug nach Anspruch 5,
dadurch gekennzeichnet,
daß die vorgegebenen Grenzen in Abhängigkeit des Ladezustands des Energiespeichers (22) variierbar sind.

7. Fahrzeug nach Anspruch 5 oder 6,
gekennzeichnet
durch einen zweiten, vom ersten Teilbereich verschiedenen Teilbereich (B) des Kennlinienfeldes, welcher einem Leistungsbedarf des Elektromotors (12, 16) entspricht, der höher ist als die im optimalen Betriebszustand des Verbrennungsmotors (4) erzeugte Leistung, wobei eine der folgenden Varianten für die Steuerung der Stromeinspeisung in den Elektromotor (12, 16) ausgewählt wird:

- Bei optimalem Betriebszustand des Verbrennungsmotors (4) wird die Differenz zwischen der Leistung des Verbrennungsmotors (4) und dem aktuellen Leistungsbedarf konstant aus dem Energiespeicher (22) gedeckt;

- die Drehzahl des Verbrennungsmotors (4) wird erhöht, bis der Verbrennungsmotor (4) den aktuellen Leistungsbedarf deckt, und in der Zwischenzeit erfolgt eine Leistungsergänzung seitens des Energiespeichers (22);

- bei maximalem Leistungsbedarf erfolgt bei maximaler Leistung des Verbrennungsmotors (4) eine zusätzliche Energieentnahme aus dem Energiespeicher (22); oder

- die gesamte Energie wird aus dem Energiespeicher (22) entnommen.

8. Fahrzeug nach einem der Ansprüche 5 bis 7,
dadurch gekennzeichnet,
daß dann, wenn der Leistungsbedarf des Elektromotors (12, 16) im Mittel niedriger ist als die von dem Verbrennungsmotor (4) bei optimalem Betriebszustand abgegebene Leistung, der Energiespeicher (22) aufgeladen wird, oder falls ein vorgegebener Ladezustand überschritten ist, der Verbrennungsmotor (4) vorübergehend abgeschaltet wird, so daß er intermittierend im optimalen Betriebszustand arbeitet.

9. Fahrzeug nach einem der Ansprüche 1 bis 8,
dadurch gekennzeichnet,
daß der Strom dann direkt von dem Generator (6) über den Energieverteiler (8) an den Elektromotor (12, 16) geliefert wird, wenn der Wirkungsgrad der aus Verbrennungsmotor (4) und Generator (6) bestehenden Einheit (2) größer ist als der Speicherwirkungsgad.

## Claims

1. Vehicle which does not run on a track, in which at least one wheel (14, 18) for drive is coupled to an electromotor (12, 16) which is supplied with electrical current by means of an electronic energy distributor (8) in proportion to a control signal produced by a control unit (20) and dependent on a drive signal, a said current being delivered from a generator (6) coupled to a combustion motor (4),

- whereby an energy storage means (22) is provided, in and from which energy can be stored and withdrawn by means of an energy distributor (8),
- whereby an energy storage means (22) is linked to a status sensor (24) which records levels of charging of an energy-storage means (22), and a control unit (20) records and determines, in connection with a control signal, power-requirement of an electromotor (12, 16),
- whereby all drive energy is made available in electrical form,
- whereby a control unit (20) for feed of current into an electromotor (12, 16), by means of an energy-distributor (8), controls removal of energy from a generator (6) and/or an energy-storage means (22) in proportion to predetermined boundary conditions, relating to a combustion motor concerned,
- which relate to optimization of at least one of following parameters

    (a) fuel consumption
    (b) exhaust-volume and composition
    (c) noise emission
    (d) aggregate loading

- which are defined by section-areas (A, B, C) of a characteristic curve of operation of a combustion motor (4),
- and whereby a control unit (20) regulates, depending on power consumption of an electromotor (12, 16) and level of charge of an energy storage means (22), operation of a unit (2) comprising a combustion motor (4) and a generator (6),

characterized in that,
increased power consumption of an electromotor (12, 16) only leads to setting of a higher power of a combustion motor (4), with increase in rev rate of a motor concerned, if a required increased power consumption stops for one of periods of time set by a control unit (20), whereby

length of a said period of time is determined based on charge-status of an energy storage-means (22).

2. Vehicle which does not run on a track, in which at least one wheel (14, 18) for drive is coupled to an electromotor (12, 16) which is supplied with electrical current by means of an electronic energy distributor (8) in proportion to a control signal produced by a control unit (20) and dependent on a drive signal, a said current being delivered from a generator (6) coupled to a combustion motor (4),

- whereby an energy storage means (22) is provided, in and from which energy can be stored and withdrawn by means of an energy distributor (8),
- whereby an energy storage means (22) is linked to a status sensor (24) which records levels of charging of an energy-storage means (22), and a control unit (20) records and determines, in connection with a control signal, power-requirement of an electromotor (12, 16),
- whereby all drive energy is made available in electrical form,
- whereby a control unit (20) for feed of current into an electromotor (12, 16), by means of an energy-distributor (8), controls removal of energy from a generator (6) and/or an energy-storage means (22) in proportion to predetermined boundary conditions, relating to a combustion motor concerned,
- which relate to optimization of at least one of following parameters

    (a) fuel consumption
    (b) exhaust-volume and composition
    (c) noise emission
    (d) aggregate loading

- which are defined by section-areas (A, B, C) of a characteristic curve of operation of a combustion motor (4),
- and whereby a control unit (20) regulates, depending on power consumption of an electromotor (12, 16) and level of charge of an energy storage means (22), operation of a unit (2) comprising a combustion motor (4) and a generator (6),

characterized in that,
increased power consumption of an electromotor (12, 16) only leads to setting of a higher power of a combustion motor (4), with increase in rev rate of a motor concerned, if a required increased power consumption stops for one of periods of time set by a control unit (20), whereby
a control unit (20) includes a learning program which statistically records frequency of and duration of actual power consumption which exceeds each power setting of a combustion motor (4), a said power consumption being determined by means of a drive signal, thereby determining a time-period for which a power-setting of a combustion motor (4) to a required output performance occurs.

3. Vehicle in accordance with either of claims 1 or 2, characterized in that
an energy storage means is developed as a storage cell (22).

4. Vehicle in accordance with any one of claims 1 to 3, characterized in that
different boundary conditions, with defined weightings, are simultaneously taken into account.

5. Vehicle in accordance with any one of claims 1 to 4, characterized in that
a first section-area (A) includes, in relation to at least one parameter, an optimum state ($be_{min}$) of operation, a minimum fuel-consumption for a given engine performance in particular, and in that operation of a unit comprising a combustion motor (4) and a generator (6) is maintained within this section-area (A) as long as power consumption of an electromotor (12, 16) remains within set limits, while an electromotor (12, 16) is supplied from a generator (6) and any excess energy is fed into an energy storage means (22).

6. Vehicle in accordance with claim 5, characterized in that
set limits can vary according to charge-status of an energy storage means (22).

7. Vehicle in accordance with claim 5 or claim 6, characterized by
a second section-area (B) of a characteristic-curve, differing from a first section-area, which corresponds to a power consumption of an electromotor (12, 16) which is higher than output performance produced in an optimum state of a combustion motor (4), whereby one of following variations is selected for control of current supply to an electromotor (12, 16):

- with optimal running of a combustion motor (4) a difference between output performance of a combustion motor (4) and current power consumption is constantly covered from an energy-storage means (22);

- a rev rate of a combustion motor (4) is raised until a combustion motor (4) covers an actual power requirement and, in an intermediate period concerned, there is supplementation of power from an energy-storage means (22);

- with maximum power requirement there is, with maximum power output performance of a combustion motor (4), an additional withdrawal of energy from an energy storage means (22); or

- all or energy concerned is withdrawn from an energy storage means (22).

8. Vehicle in accordance with any one of claims 5 to 7 characterized in that
if power consumption of an electromotor (12, 16) is, on average, lower than power output of a combustion-motor (4) if running at an optimum level, an energy storage-means is charged, or if a set charge-status is exceeded, a combustion motor (4) is temporarily switched off such that it intermittently functions at an optimum level.

9. Vehicle in accordance with any one of claims 1 to 8, characterized in that current is supplied directly to an electromotor (12, 16) from a generator (6) via an energy distributor (6) if efficiency of a unit (2) comprising a combustion motor (4) and a generator (6) is greater than efficiency of a storage-means concerned.

**Revendications**

1. Véhicule non guidé, dans lequel au moins une roue (14,18) est couplée pour son entraînement à un moteur électrique (12,16), lequel est alimenté en courant par l'intermédiaire d'un répartiteur d'énergie électronique (8) en fonction d'un signal de commande engendré par une unité de commande (20) et dépendant d'un signal de déplacement, qui est délivré par un générateur (6) couplé à un moteur à combustion interne (4),

   - une réserve d'énergie (22) étant prévue dans laquelle de l'énergie peut être stockée ou de laquelle de l'énergie peut être prélevée par l'intermédiaire du répartiteur d'énergie (8),
   - un capteur d'état (24) étant associé à la réserve d'énergie (22), lequel détecte l'état de charge de la réserve d'énergie (22), et l'unité de commande (20) déterminant le besoin de puissance du moteur électrique (12,16) en fonction du signal de déplacement,
   - l'énergie d'entraînement totale étant rendue disponible sous forme électrique,
   - l'unité de commande (20) pour l'amenée de courant dans le moteur électrique (12,16) commandant, par l'intermédiaire du répartiteur d'énergie (8), le prélèvement de l'énergie du générateur (6) et/ou de la réserve d'énergie (22) en fonction de conditions marginales prédéterminées concernant le moteur à combustion interne,

- qui concernent l'optimisation d'au moins un des paramètres suivants :

   (a) consommation de carburant ;
   (b) quantité de gaz d'échappement et composition du gaz d'échappement ;
   (c) émission de bruit ; et
   (d) sollicitation de l'appareillage,

- et sont définies par des zones partielles (A,B,C) d'un domaine caractéristique pour le fonctionnement du moteur à combustion interne (4),
- et l'unité de commande (20) réglant le fonctionnement de l'unité (2) constituée du moteur à combustion interne (4) et du générateur (6), sur une des zones partielles, de façon dépendant du besoin de puissance du moteur électrique (12,16) et de l'état de charge de la réserve d'énergie (22),

caractérisé en ce qu'une augmentation du besoin de puissance du moteur électrique (12,16) n'entraîne une augmentation de puissance du moteur à combustion interne (4) en augmentant la vitesse de rotation du moteur que lorsque le besoin de puissance augmenté exigé dure pendant un intervalle de temps prédéfini par l'unité de commande (20), la valeur de l'intervalle de temps étant déterminée en fonction de l'état de charge de la réserve d'énergie (22).

2. Véhicule non guidé, dans lequel au moins une roue (14,18) est couplée pour son entraînement à un moteur électrique (12,16), lequel est alimenté en courant par l'intermédiaire d'un répartiteur d'énergie électronique (8) en fonction d'un signal de commande engendré par une unité de commande (20) et dépendant d'un signal de déplacement, qui est délivré par un générateur (6) couplé à un moteur à combustion interne (4),

   - une réserve d'énergie (22) étant prévue dans laquelle de l'énergie peut être stockée ou de laquelle de l'énergie peut être prélevée par l'intermédiaire du répartiteur d'énergie (8),
   - un capteur d'état (24) étant associé à la réserve d'énergie (22), lequel détecte l'état de charge de la réserve d'énergie (22), et l'unité de commande (20) déterminant le besoin de puissance du moteur électrique (12,16) en fonction du signal de déplacement,
   - l'énergie d'entraînement totale étant rendue disponible sous forme électrique,
   - l'unité de commande (20) pour l'amenée de courant dans le moteur électrique (12,16) commandant, par l'intermédiaire du répartiteur d'énergie (8), le prélèvement de l'énergie du générateur (6) et/ou de la réserve d'énergie (22) en fonction de conditions marginales prédéterminées concernant le moteur à combustion interne,
- qui concernent l'optimisation d'au moins un des paramètres suivants :

    (a) consommation de carburant ;
    (b) quantité de gaz d'échappement et composition du gaz d'échappement ;
    (c) émission de bruit ; et
    (d) sollicitation de l'appareillage,

- et sont définies par des zones partielles (A, B,C) d'un domaine caractéristique pour le fonctionnement du moteur à combustion interne (4),
- et l'unité de commande (20) réglant le fonctionnement de l'unité (2) constituée du moteur à combustion interne (4) et du générateur (6), sur une des zones partielles, de façon dépendant du besoin de puissance du moteur électrique (12,16) et de l'état de charge de la réserve d'énergie (22),

caractérisé en ce qu'une augmentation du besoin de puissance du moteur électrique (12,16) n'entraîne une augmentation de puissance du moteur à combustion interne (4) en augmentant la vitesse de rotation du moteur que lorsque le besoin de puissance augmenté exigé dure pendant un intervalle de temps prédéfini par l'unité de commande (20), l'unité de commande (20) comportant un programme d'apprentissage qui détermine statistiquement la fréquence et la durée du besoin de puissance actuelle dépassant la puissance à chaque fois réglée du moteur à combustion interne (4), qui est déterminé par l'intermédiaire du signal de déplacement et, ensuite, détermine le moment auquel a lieu un réglage de la puissance du moteur à combustion interne (4) à la puissance exigée.

3. Véhicule selon une des revendications 1 ou 2, caractérisé en ce que la réserve d'énergie est réalisée sous forme d'accumulateur (22).

4. Véhicule selon une des revendications 1 à 3, caractérisé en ce que différentes conditions marginales sont prises en compte simultanément et avec des pondérations définies.

5. Véhicule selon une des revendications 1 à 4, caractérisé en ce qu'une première zone partielle (A) présente un état de fonctionnement optimal (be$_{min}$) relativement à au moins un paramètre, en particulier une consommation de carburant minimale pour une puissance donnée du moteur, et en ce que le fonctionnement de l'unité (2) constituée du moteur à combustion interne (4) et du générateur (6) est maintenu à l'intérieur de cette zone partielle (A), aussi longtemps que l'exigence de puissance de la part du moteur électrique (12,16) demeure dans des limites prédéfinies, tandis que le moteur électrique (12,16) est alimenté par le générateur (6) et, le cas échéant, de l'énergie en excès est amenée dans la réserve d'énergie (22).

6. Véhicule selon la revendication 5, caractérisé en ce que les limites prédéfinies sont variables en fonction de l'état de charge de la réserve d'énergie (22).

7. Véhicule selon la revendication 5 ou 6, caractérisé par une deuxième zone partielle (B), différente de la première zone partielle, du domaine caractéristique, laquelle correspond à un besoin de puissance du moteur électrique (12,16) qui est plus élevé que la puissance engendrée dans l'état de fonctionnement optimal du moteur à combustion interne (4), une des variantes suivantes pour la commande de l'alimentation en courant du moteur électrique (12,16) étant choisie :

- pour l'état de fonctionnement optimal du moteur à combustion interne (4), la différence entre la puissance du moteur à combustion interne (4) et le besoin de puissance actuel est couverte de façon constante à partir de la réserve d'énergie (22) ;
- la vitesse de rotation du moteur à combustion interne (4) est augmentée jusqu'à ce que le moteur à combustion interne (4) couvre le besoin de puissance actuel et, entre-temps, un complément de puissance est réalisé de la part de la réserve d'énergie (22) ;
- dans le cas d'un besoin de puissance maximale, un prélèvement d'énergie supplémentaire à partir de la réserve d'énergie (22) est effectué pour la puissance maximale du moteur à combustion interne (4) ; ou
- l'énergie totale est prélevée à partir de la réserve d'énergie (22).

8. Véhicule selon une des revendications 5 à 7, caractérisé en ce que, lorsque le besoin de puissance du moteur électrique (12,16) est en moyenne plus faible que la puissance fournie par le moteur à combustion interne (4) dans l'état de fonctionnement optimal, la réserve d'énergie (22) est chargée ou, dans le cas où un état de charge prédéfini est dépassé, le moteur à combustion interne (4) est coupé de façon temporaire, de sorte qu'il travaille dans l'état de fonctionnement optimal de façon intermittente.

9. Véhicule selon une des revendications 1 à 8, caractérisé en ce que le courant est délivré directement du générateur (6), par le répartiteur d'énergie (8), au moteur électrique (12,16) lorsque le rendement de l'unité (2) constituée du moteur à combustion interne (4) et du générateur (6) est plus grand que le rendement de la réserve.

# Fig.1

# Fig.2

Bereich B

be min

Bereich A  Tm

bv

Bereich C

EP 0 606 354 B1

# Fig. 3